# EUROPEAN PATENT APPLICATION

(11) **EP 4 748 876 A1**
(43) Date of publication of application: **27.05.2026**
(21) Application number: 24214710.6
(22) Date of filing: 22.11.2024
(51) Int. Cl.: C08J 11/10, C08J 11/28

(54) **DEPOLYMERIZATION OF POLYURETHANE AND POLYISOCYANURATE FOAMS USING AMINOLYSIS AND RELATED METHODS**

(71) Applicant: VITO NV, 2400 Mol (BE)
(72) Inventor: HOUBEN, Sofie, 2400 Mol (BE); ELST, Kathy, 2400 Mol (BE); FEGHALI, Elias, 2400 Mol (BE)
(74) Representative: Arnold & Siedsma

(57) **Abstract**

A method for depolymerizing rigid polymeric polyurethane (PUR) or polyisocyanurate (PIR) foams involves grinding the foams to form a powder, adding the powder to liquid aliphatic amines to obtain a reaction mixture, and performing an aminolysis reaction on the reaction mixture under an inert atmosphere at elevated temperatures and extended incubation times. The process allows for the recovery of polymeric methylene diphenyl diisocyanate (PMDA) in high purity and high yields from the depolymerized foams. The method also includes recovering PMDA by precipitation and using it as a precursor to obtain polymeric methylene diisocyanate (PMDI) for the synthesis of PUR and PIR foams.

## Description

### TECHNICAL FIELD

The present invention relates to the depolymerization of polyurethane (PUR) and polyisocyanurate (PIR) foams using aminolysis.

### BACKGROUND

Polyurethane (PUR) and polyisocyanurate (PIR) foams are widely used in various industries due to their excellent thermal insulation properties, mechanical strength, and versatility. These materials are commonly found in applications such as building insulation, refrigeration, automotive components, and furniture. However, the widespread use of PUR and PIR foams has led to significant environmental concerns, particularly regarding their disposal and recycling. Traditional methods of disposing of these foams, such as landfilling and incineration, pose environmental hazards and are not sustainable in the long term. Consequently, there is a growing need for effective recycling methods that can break down these foams into their constituent components for reuse in new products.

One of the primary challenges in recycling PUR and PIR foams is their complex chemical structure, which makes them resistant to conventional recycling techniques. The foams are composed of cross-linked polymer networks that are difficult to break down without causing significant degradation of the material. This has led to the exploration of various chemical recycling methods, such as glycolysis, hydrolysis, and aminolysis, to depolymerize the foams into their original monomers or other valuable chemicals.

The current state of the art in chemical recycling of PUR and PIR foams mainly focus on the recovery of polyols, while little effort is put into the recovery of the isocyanate part. As the main component of rigid PUR and PIR foams is isocyanate, these materials call for a different strategy. In this work we propose aminolysis as a strategy to recover polyamine analogues of polymethylene diphenylisocyanate, hereinafter referred to as PMDA, from rigid PUR/PIR foam.

As further detailed hereinafter, in the aminolysis reaction of the present invention linear aliphatic amines are used at temperatures between 100 and 160°C. The effect of time, temperature and amine reagent was investigated. PMDA is isolated from the resulting depolymerization product by precipitation. PMDA could be recovered with a high yield of at least 48% wt and a high purity of at least 67%. Since PMDA is the direct precursor to polymeric methylene diisocyanate (PMDI), the original isocyanate building block, this work provides a circular solution for the recycling of PUR and PIR. Also, solvent recovery was possible as demonstrated for the linear aliphatic amine 1,3-diaminopropane.

### SUMMARY

In accordance with embodiments, a method is provided for depolymerizing rigid polymeric polyurethane (PUR) or polyisocyanurate (PIR) foams. The method involves refining the rigid foams to a refined product, such as grinding the foams to form a powder, adding the refined product to liquid aliphatic amines to obtain a reaction mixture, performing an aminolysis reaction on the reaction mixture under an inert atmosphere at elevated temperatures and extended incubation times to depolymerize the PUR or PIR foams, and recovering polyamine analogues of polymeric methylene diphenyl diamine (PMDA) in high purity and high yields from the depolymerized PUR or PIR foams.

In accordance with an embodiment, the method involves recovering PMDA, wherein said PMDA is represented by formula (I)

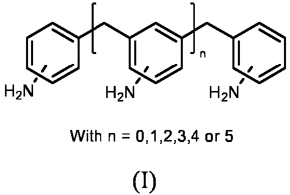

In accordance with other embodiments, the method includes recovering PMDA from the depolymerized PUR or PIR foams by precipitation.

In accordance with further embodiments, the aliphatic amines used in the method are selected from the group consisting of aliphatic diamines and aliphatic triamines that are either liquid at RT (25°C) are at the reaction temperature of at least 100°C. In an embodiment the alkyl moieties present in said aliphatic amines, independently comprise from 1 to 8 carbon atoms, and may be linear or branched; more in particular linear aliphatic amines; even more in particular up to Cs-linear aliphatic amines.

In accordance with an embodiment, the reaction mixtures comprises up to 70% wt of the refined product, such as a powder or pellets, of polymeric PUR or PIR foams, in particular from about 10% wt to about 66% wt; more in particular from about 10% wt to about 50% wt; even more in particular from about 10%wt to about 33%wt.

In accordance with additional embodiments, the inert atmosphere required for the aminolysis reaction is achieved by flushing the reaction mixture with nitrogen and placing the reaction mixture in a closed container.

In accordance with yet other embodiments, the elevated temperatures for the aminolysis reaction range from 100°C to 200°C; in particular from 100°C to 160°C; more in particular from 120°C to 160°C; even more in particular from 140°C to 160°C; in an even further particular embodiment from 150°C to 160°C.

In accordance with further embodiments, the extended incubation times for the aminolysis reaction are up to 6 hours.

In accordance with additional embodiments, the high purity of recovered PMDA is at least 60%. The PMDA purity as used herein, is as determined for the total of all recovered PMDA in accordance with formula (I).

In accordance with yet other embodiments, the high yields of recovered PMDA are at least 48%. Also the yields of recovered PMDA, corresponds to the total of all recovered PMDA in accordance with formula (I).

In accordance with further embodiments, the precipitation of PMDA is performed using water or an aqueous alkaline solution, such as NaOH.

In accordance with additional embodiments, the recovered PMDA is used as a precursor to obtain polymeric methylene diisocyanate (PMDI) used in the synthesis of the PUR and PIR foams.

In accordance with other embodiments, a method is provided for recycling rigid PUR or PIR foams. The method involves grinding the rigid polymeric foams to form a powder, adding the powder to liquid aliphatic amines to obtain a reaction mixture, performing an aminolysis reaction on the reaction mixture under reaction conditions to depolymerize the rigid polymeric foams, and recovering a reaction product from the aminolysis reaction by precipitation.

In accordance with further embodiments, the powder is added stepwise to the liquid aliphatic amines.

In accordance with additional embodiments, the aliphatic amines used in the recycling method are selected from the group consisting of aliphatic diamines and aliphatic triamines. In particular, aliphatic diamines and aliphatic triamines that are liquid at room temperature at atmospheric pressure.

In accordance with a further embodiment, the aliphatic diamines and aliphatic triamines are selected from the group including ethylenediamine (EDA), diaminopropane (DAPr), diaminobutane (DAB), diaminopentane (DAP), diaminohexane (DAH), diethylenetriamine (DETA) and triethylenetetramine (TETA).

In accordance with yet other embodiments, the reaction conditions for the aminolysis reaction comprise an inert atmosphere, elevated temperatures, and extended incubation times.

In accordance with further embodiments, the inert atmosphere is achieved by flushing the reaction mixture with nitrogen and placing the reaction mixture in a closed container.

In accordance with additional embodiments, the elevated temperatures for the aminolysis reaction range from 100°C to 160°C and the extended incubation times are up to 6 hours.

In accordance with yet other embodiments, the reaction product recovered from the aminolysis reaction is PMDA in high purity and high yields.

In accordance with further embodiments, the high purity of recovered PMDA is at least 60% and the high yields of recovered PMDA are at least 60%.

In accordance with additional embodiments, the precipitation of the reaction product is performed using water or an aqueous alkaline solution, such as NaOH.

The invention further provides the use of the methods as herein disclosed in recycling of PUR or PIR foams.

### BRIEF DESCRIPTION OF THE DRAWINGS

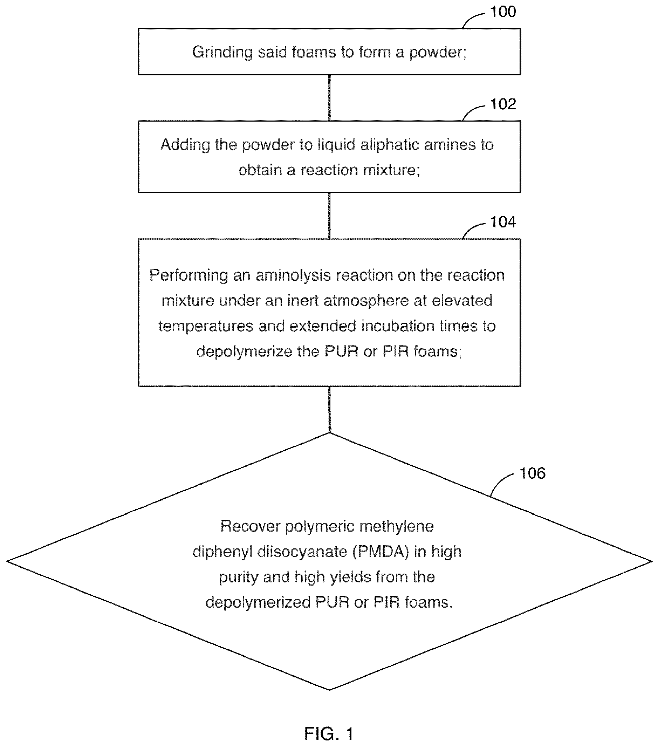

FIG. 1 illustrates, in a flowchart, operations for depolymerizing PUR or PIR foams to recover PMDA in high purity and yields.

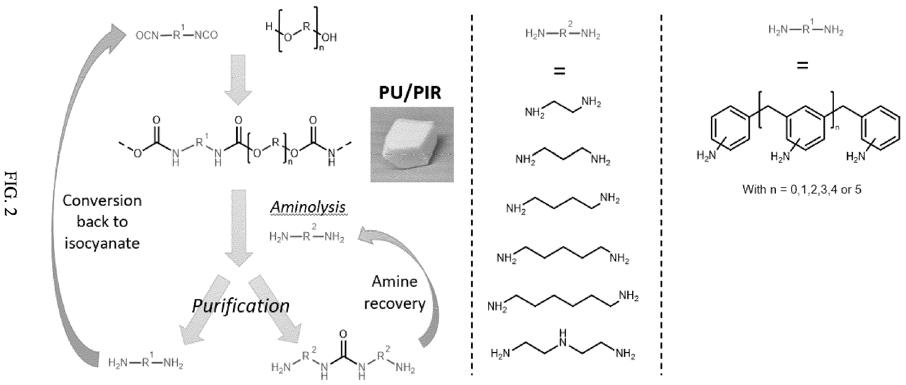

FIG. 2 illustrates the aminolysis reaction, with an indication of the amines (NH₂-R²-NH₂) used and of the recovered PMDA products (NH₂-R¹-NH₂).
FIG.3 (a) Conversion (%) of aminolysis reactions performed on rPUR1 at 6h, 100°C or 160°C, and 33% polymer loading with a variation of amine reagents, (b) Conversion (%) of aminolysis reactions performed on rPUR1 at 6h and 33% polymer loading, with DETA as reagent at various temperatures and the subsequent yield (%) and purity (%) of isolated PMDA. (c) Conversion (%) of aminolysis reactions performed on rPUR1 at 6h and 160°C, with DETA as reagent at various polymer loadings (%) and the subsequent yield (%) and purity (%) of isolated PMDA.

### DETAILED DESCRIPTION

In step 100, the process begins with refining the rigid polyurethane (PUR) and polyisocyanurate (PIR) foams to form a refined product. As used herein the refining step is mechanical preprocessing step wherein the solid waste of rigid PUR and/or PIR foams is fragmented into a refined product selected from pellets or powders. This fragmentation can be performed using mechanical methods typically applied in the mechanical recycling of PUR and/or PIR, including grinding, cutting or tearing. Preparation of fine powders (with particles less than 100-125 microns), for example employs two-roll mills processing. Preparation of powders with a larger diameter (less than 250 microns) uses for example precision knife cutting. Pellets are typically prepared with pellet mills. They consist of two or more metal rollers, which press the polyurethane through the metal plate with holes.

In an embodiment the refining consists of grinding the rigid polyurethane (PUR) and polyisocyanurate (PIR) foams to form a powder. This step increases the surface area of the foams, making them more amenable to subsequent chemical reactions. The grinding process can be performed using various mechanical methods, such as milling or pulverizing, to achieve the desired particle size. The resulting powder serves as the starting material for the aminolysis reaction, which is the core of the depolymerization process.

The materials involved in this step include the rigid PUR and PIR foams, which are the initial materials, and the refined product, in particular the powder, which is the product of the refining (grinding) process. The grinding transforms the foams into a fine powder, facilitating their interaction with liquid aliphatic amines in the subsequent steps.

The refining step ensures that the foams are adequately prepared for the aminolysis reaction. By reducing the foams to a fragmented product, the process enhances the efficiency of the chemical reaction, leading to more effective depolymerization of the polymeric materials. In an embodiment, this step sets the stage for the addition of the powder to liquid aliphatic amines, which will be discussed in the next step.

In step 102, the process involves adding the refined product (powder) to liquid aliphatic amines to obtain a reaction mixture. This step is part of the method for depolymerizing rigid PUR or PIR foams. The materials involved in the reaction mixture include the powder, and liquid aliphatic amines. The powder, derived from grinding the rigid PUR and PIR foams, is incrementally introduced to the aliphatic amines, which can be either aliphatic diamines or aliphatic triamines. This addition is performed to ensure a homogeneous reaction mixture, which is necessary for the subsequent aminolysis reaction.

The aliphatic amines serve as the aminolysis agents, facilitating the breakdown of the polymeric structure of the foams. The stepwise addition of the powder to the aliphatic amines helps in controlling the reaction kinetics and ensuring that the reaction mixture is well-mixed, which is important for achieving efficient depolymerization.

The reaction mixture thus obtained is a precursor to the aminolysis reaction, where the depolymerization of the PUR or PIR foams continues. This step sets the stage for the subsequent steps where the reaction mixture will be subjected to an inert atmosphere, elevated temperatures, and extended incubation times to complete the depolymerization process.

In summary, step 102 involves the careful addition of the ground foam powder to liquid aliphatic amines to form a reaction mixture, which is a preparatory step for the aminolysis reaction that follows. This step ensures that the reaction mixture is well-prepared for the efficient depolymerization of the rigid polymeric foams.

In step 104, the process involves performing an aminolysis reaction on the reaction mixture under an inert atmosphere at elevated temperatures and extended incubation times to depolymerize the PUR or PIR foams. This step is for breaking down the rigid polymeric structure of the foams into smaller, more manageable components. The inert atmosphere is for example achieved by flushing the reaction mixture with nitrogen and placing the reaction mixture in a closed container, as detailed in sub-step 104-a. This prevents oxidation and ensures that the reaction proceeds efficiently. The elevated temperatures, ranging from 100°C to 160°C, as specified in sub-step 104-b, provide the necessary thermal energy to drive the aminolysis reaction forward. Additionally, the extended incubation times, up to 6 hours as mentioned in sub-step 104-c, allow sufficient time for the reaction to reach completion, ensuring maximum depolymerization of the foams.

The materials involved in this aminolysis reaction step include the reaction mixture comprising the PUR or PIR foams, the inert atmosphere, elevated temperatures, and extended incubation times. The actions associated with these materials are for the successful depolymerization of the foams. The aminolysis reaction involves the chemical breakdown of the polymer chains in the foams, facilitated by the reaction mixture, which consists of the ground foam powder and liquid aliphatic amines. The inert atmosphere, created by nitrogen flushing and a closed container, prevents unwanted side reactions. The elevated temperatures provide the necessary energy for the reaction, while the extended incubation times ensure that the reaction proceeds to completion.

The use of linear aliphatic diamines or triamines in the reaction mixture is emphasized, as these compounds are particularly effective in facilitating the aminolysis reaction. The process described in step 104 aligns with the claims, which highlight the importance of specific reaction conditions, such as the inert atmosphere, elevated temperatures, and extended incubation times, in achieving efficient depolymerization of the foams. The detailed description of these conditions underscores their role in the overall process, ensuring high yields and purity of the recovered products. In an aspect of the invention the linear aliphatic diamines or triamines used as aminolysis reagents are selected from the group including ethylenediamine (EDA), diaminopropane (DAPr), diaminobutane (DAB), diaminopentane (DAP), diaminohexane (DAH), diethylenetriamine (DETA) and triethylenetetramine (TETA).

In step 106, the process involves the recovery of polymeric methylene diphenyl diamine (PMDA) in high purity and high yields from the depolymerized polyurethane (PUR) or polyisocyanurate (PIR) foams. This step ensures the efficient extraction of PMDA, which is a valuable component for further applications.

In sub-step 106-a, PMDA is recovered from the depolymerized PUR or PIR foams by precipitation. This involves the separation of PMDA from the reaction mixture, which is a step to ensure the purity and yield of the recovered product. The precipitation process is typically performed using a solvent that facilitates the separation of PMDA from other components in the mixture. In a particular embodiment, the solvent used to facilitate the separation of PMDA from the other components in the mixture is water or an aqueous alkaline solution, preferably an aqueous alkaline solution such as NaOH.

It has been observed that using the procedure as herein provided that the PMDA can be separated with a high purity from the mixture. The high purity of the recovered PMDA is at least 60%. This indicates that the recovery process is designed to achieve a significant level of purity, ensuring that the PMDA obtained is of high quality and suitable for further use.

Not only could the PMDA be obtained with a high purity, but also with a high yield. The high yields of recovered PMDA are at least 48%. This emphasizes the efficiency of the recovery process, ensuring that a substantial amount of PMDA is obtained from the depolymerized foams, making the process economically viable.

Finally, sub-step 106-b explains that the recovered PMDA can be used as a precursor to obtain polymeric methylene diisocyanate (PMDI), which is used in the synthesis of PUR and PIR foams. This step highlights the circular nature of the process, where the recovered PMDA is reused in the production of new foams, contributing to the sustainability and efficiency of the overall process.

In summary, step 106 and its sub-steps provide a detailed and methodical approach to recovering high-purity and high-yield PMDA from depolymerized PUR or PIR foams, using precipitation with an appropriate solvent, and subsequently utilizing the recovered PMDA as a precursor for further synthesis of foams. This process not only ensures the efficient recovery of valuable components but also promotes the recycling and reuse of materials in the production cycle.

In step 200, the process begins with grinding the rigid polymeric foams, specifically rigid polyurethane (PUR) and polyisocyanurate (PIR) foams, to form a powder. This step increases the surface area of the foams, facilitating subsequent chemical reactions. The grinding process can be performed using various mechanical methods, such as milling or pulverizing, to achieve a fine powder consistency.

The ground powder is then added to liquid aliphatic amines to obtain a reaction mixture. The liquid aliphatic amines used in this process are selected from the group consisting of liquid aliphatic diamines and liquid aliphatic triamines. This selection is significant as these amines act as nucleophiles in the aminolysis reaction, breaking down the polymer chains of the PUR and PIR foams.

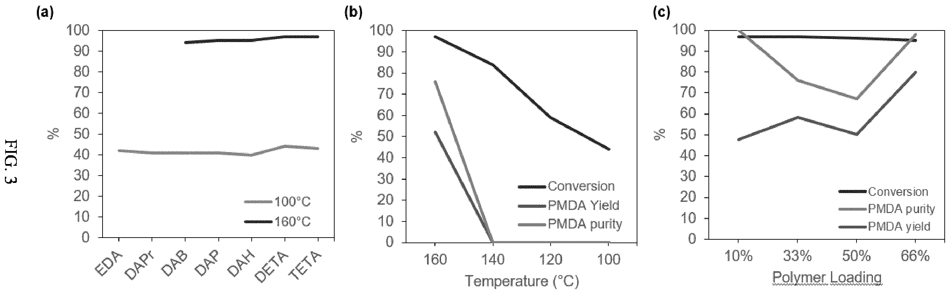

The addition of the powder to the liquid aliphatic amines is performed stepwise. This stepwise addition ensures a controlled reaction environment, preventing any sudden exothermic reactions that could lead to safety hazards or incomplete reactions. The stepwise addition also allows for better mixing and interaction between the powder and the liquid amines, ensuring a more uniform reaction mixture. It also enables conversion of high loads of polymer (polymer loading of 66 %wt), but for such high loads incubation times of a couple of hours are required for all foam to be dissolved. As evidenced in the examples hereinafter, all tested polymer loads resulted in quasi complete conversion (more than 90%) of the PUR of PIR foams (see Fig. 3c). With polymer loads up tot 33 %wt; in particular with polymer loads in the range of 10 %wt. to 33%wt, the initial addition time could be much shorter whilst still providing PMDA yields of at least 45% and PMDA purities of at least 60%.

The reaction mixture is then subjected to an aminolysis reaction under specific reaction conditions to depolymerize the rigid polymeric foams. The reaction conditions include an inert atmosphere, elevated temperatures, and extended incubation times. The inert atmosphere is achieved by flushing the reaction mixture with nitrogen and placing it in a closed container. This prevents oxidation and other side reactions that could interfere with the aminolysis process.

The elevated temperatures, ranging from 100°C to 160°C, provide the necessary thermal energy to drive the aminolysis reaction forward. The extended incubation times, up to 6 hours, ensure that the reaction proceeds to completion, breaking down the polymer chains into smaller molecules.

Following the aminolysis reaction, the reaction product is recovered by precipitation. The precipitation is performed using water or an alkaline solution such as NaOH in water, an aqueous solution facilitates the separation of the reaction product from the reaction mixture. The reaction product, identified as polymeric methylene diphenyl diisocyanate (PMDA), is recovered in high purity and high yields. The high purity and yields, of at least 45% and 60% respectively, indicate the efficiency of the aminolysis process in breaking down the rigid polymeric foams and recovering valuable chemical components.

In summary, the present invention involves a series of well-coordinated actions, starting from grinding the rigid polymeric foams to forming a powder, adding the powder to liquid aliphatic amines, performing an aminolysis reaction under controlled conditions, and finally recovering the reaction product by precipitation. Each action is designed to ensure the efficient depolymerization of the foams and the recovery of high-purity PMDA, contributing to a sustainable recycling process for rigid polymeric foams.

The invention will now be illustrated by means of the following synthetic and biological examples, which do not limit the scope of the invention in any way.

### EXAMPLES

### MATERIALS AND METHODS

**Materials.** *Reagents and solvents.* 1,4-diaminobutane (DAB, 99%, Sigma Aldrich), 1,3-Diaminopropane (DAP, 99+%, sigma Aldrich), 1,5-diaminepentane (DAP, 98+%, TCI Europe), 1,6-diaminohexane (DAH, 99,5+%, Sigma Aldrich), Triethylenetetramine (TETA, mixture of isomers for synthesis), Diethylenetriamine (DETA, 99%, Sigma Aldrich), methylenedianiline (MDA, 97+%, sigma Aldrich), Aminohexane (AH, 99+%, sigma Aldrich), Dipropylamine (DPA, 99+%, sigma Aldrich), Pentanediol (PD, 97+%, TCI europe) and Ethylenediamine (EDA, 99+%, Sigma Aldrich) were bought and used without further treatment. Daltolac R585 and Suprasec 2085 were received from Huntsman and used without further treatment. End-of-life PUR (rPUR2) and PIR r(PIRl) samples originating from construction waste were used as received.

*Rigid PUR foam (rPUR1).* rPUR1 was prepared using Daltolac R585 Polyol and Suprasec 2085 PMDI to achieve a foam with index 1.10. Typically, 7.6 g of Daltolac polyol, 0.3 g of distilled water, and 0.2 g of surfactant are added in a plastic beaker. The components are mixed vigorously for 1 min with a mechanical stirrer. Then 17.0 g of Suprasec isocyanate is added to the same beaker and rigorously stirred for 1 minute or until foaming is observed. The resulting foam is left undisturbed for 1 hour to allow full completion of the reaction.

**Characterization methods.** *Nuclear magnetic resonance (NMR).* ¹H NMR spectroscopy for determination of conversion were performed on a Magritek spinsolve ultra 80 MHz benchtop NMR using deuterated DMSO (DMSO-d6) as a solvent at room temperature (298 K). Spectra were recorded at 90° pulse angle, 6.4 s acquisition time, 7 s repetition time and 32 scans. Calibration was performed using TMS as reference.

*Fourier Transform Infrared Spectra (FT-IR).* FT-IR spectra were recorded on a Nicolet IS10 from Thermo Scientific equipped with a diamond crystal in attenuated total reflectance (ATR) mode. Spectra were recorded between 4000-400 cm⁻¹ with a resolution of 4 cm⁻¹ and averaged over 32 scans. Blank scans were subtracted from the sampled scans prior to their analysis.

*Gel permeation chromatography (GPC).* Gel permeation Chromatography was performed on a Waters system equipped with a Styragel HRE4 columns, a refractive index detector (RID-10A) and a UV detector (SPD-20A). The instrument was calibrated with polystyrene standards (1920-1500000 g·mol-1) and eluted with THF. Samples were prepared in THF with a concentration of 2 mg/mL and a flow rate of 0.80 mL/min was applied during the measurement.

*Liquid chromatography (LC-UV-HRMS).* Semiquantitative analysis was performed using a combination of liquid chromatography and mass spectrometry. The LC-UV-HRMS measurements were performed on a Bruker Elute LC coupled to the Bruker TIMSTOF Pro2 equipped with Electrospray ionization, both in positive and negative ionization mode. An Acquity BEH C18 100 × 2.1 mm, 1.7 µm column was used with solvent A: 10 mM NH4Ac in mQ water and solvent B: CH3CN/IPA 70/30. The column temperature was 60 °C and the flow rate was 0.4 ml/min. The gradient was as follows: t = 0 min, 5% B, t = 2 min: 5% B, t = 20 min: 100% B, t = 25 min: 100% B, t = 25.1 min: 5% B, 30.5 min: 5% B. The injection volume was 2 µl. The DAD detector was set to measure between 200 - 500 nm. MS accurate mass calibration was performed using NaFormate clusters. The MDA and oligomer concentration was determined based on a calibration curve of MDA in THF ranging from 1 mg/mL to 0.001 mg/mL.

**Depolymerization rigid PUR and PIR foams.** rPUR1 and rPIR1 foams are ground to a fine powder in a cryogrinder. The amine reagent (1 g) is added to the Schlenk tube together with a magnetic stirring bar and the tube is closed using a glass stopper covered with PTFE tape. The reaction is then heated to 100 °C or 120 °C for a 1 hour addition step. During this addition step, 0.5 g of PUR or PIR foam powder is added gradually (foam/amine ratio 1:2). Typically, 0.1g of foam is added each time to prevent the mixture becoming too viscous and halter stirring. After the last portion of foam is added, the Schlenk tube is flushed with nitrogen and kept closed for the remainder of the procedure to avoid oxidation. The temperature is then increased to the desired depolymerization temperature (100 °C, 120°C, 140°C or 160°C), and the reaction is left to stir for an additional 5 hours. The reaction is stopped by placing the Schlenk tubes in an ice bath to cool down. For amine reagents with boiling points below 160°C, the depolymerization reaction is performed in ACE pressure tubes fitted with a PTFE seal. All depolymerization products are analyzed by ¹H-NMR spectroscopy to determine conversion.

**Purification of reaction product.** The crude reaction product (1 mL) was dissolved in 3 mL water. After stirring the aqueous solution for 10 minutes a caramel like precipitated adheres to the stirring bar. The water is decanted to isolate the precipitate. The precipitate is washed with 3 mL of water twice, redissolved in DCM, filtered and dried under vacuum at 60°C.

### RESULTS AND DISCUSSION

**Screening of aminolysis reaction conditions for rPUR1: temperature.** Depolymerization of rPUR1 was performed for 6 hours (33% polymer loading) at depolymerization temperatures of 100°C, 120°C, 140°C or 160°C using diethylenetriamine (Figure 3b). For the reaction at 100°C, addition is also done at 100°C. For all other reactions addition is done at 120°C. Conversion of the depolymerization reaction is monitored by ¹H-NMR spectroscopy. Comparison is made between the aromatic protons of methylenedianiline (MDA) derivatives and the aromatic protons in the polyurethane backbone. Due to the overlap in integration regions in NMR analysis, a theoretical conversion of 100% is impossible to obtain, and therefore any conversions over 95% are considered full conversions.

As expected, conversion increases with increasing temperature. Full conversion (>95%) is reached at temperatures of 160°C. At temperatures of 140°C, 120°C and 100°C conversions of 84%, 59%, and 44% are reached respectively indicating that these temperatures are insufficient to reach full conversion after 6 hours.

**Screening of aminolysis reaction conditions for rPUR1: Effect of amine chainlength.** Depolymerization of rPUR1 was performed under different conditions using aliphatic (di)amines of different chainlength including ethylenediamine (EDA), 1,3-diaminopropane (DAPr), 1,4-diaminobutane (DAB), 1,5-diaminopentane (DAP), and 1,6-diaminohexane (DAH). Additionally a comparison is made between diethylenetriamine (DETA) and triethylenetetramine (TETA). Reactions are performed for 6 hours (33% polymer loading) with an addition temperature of 120°C and a depolymerization temperature of 160°C or 100°C. Conversion of the depolymerization reaction is monitored by ¹H-NMR spectroscopy (figure 3a).

No significant difference is seen between linear diamines of different chainlength. At a depolymerization temperature of 160°C, all diamines reach near full conversion (>94%), regardless of their chainlength. Linear diamines EDA and DAPr could not be tested at 160°C. Their low boiling point leads to high volatility or pressure buildup in the reaction vessel. A similar trend can be seen at 100°C, where all linear diamines reach a conversion between 40-44%, including EDA and DAPr.

**Screening of aminolysis reaction conditions for rPUR1: Effect of polymer loading.** Depolymerization of rPUR1 was performed using polymer loading of 10%, 33%, 50%, and 66%. Reactions are performed for 6 hours with an addition step of 1 hour at 120°C and a depolymerization step of 5 hours at 160°C (figure 3c).

High conversions were obtained for all reactions, regardless of polymer loading. However, addition could not be achieved within 1 hour for the reactions at 50% and 66% polymer loading, these required an addition step of 2 hours and 3 hours respectively. Purification of PMDA was successful for all reactions, with PMDA purity of 100%, 76%, 67% and 98% and PMDA yield of 48%, 58%, 50% and 80% respectively for the reactions at 10%, 33%, 50% and 66% polymer loading.

**Screening of aminolysis reaction conditions for rPUR1: Effect of amine nature.** Depolymerization of rPUR1 was performed under different conditions using (di)amines, polyols or alkanes of similar chainlength, including diethylenetriamine (DETA), 1,5-diaminopentane (DAP), aminohexane, dipropylamine, 1,5-pentanediol (PD), and hexane as well as aromatic amine methylenedianiline (MDA). Reactions are performed for 6 hours (33% polymer loading) with an addition temperature of 120°C and a depolymerization temperature of 140°C. Due to boiling points below 120°C, depolymerization reactions using dipropylamine and hexane were performed at 100°C and 60°C instead. Conversion of the depolymerization reaction is monitored by ¹H-NMR spectroscopy (table 1).

**Table 1**

| Foam | Amine | Addition T (°C) | Addition Time (h) | Reaction T (°C) | Reaction Time (h) | Polymer Loading (%) | Conv. (%) |
|---|---|---|---|---|---|---|---|
| rPUR1 | Diethylenetriamine | 120 | 1 | 140 | 5 | 33 | 94 |
| rPUR1 | Di aminopentanc | 120 | 1 | 140 | 5 | 33 | 95 |
| rPUR1 | Aminohexane | 120 | 1 | 140 | 5 | 33 | insoluble |
| rPUR1 | Dipropylamine | 100 | 1 | 100 | 5 | 33 | insoluble |
| rPUR1 | Pentanediol | 120 | 1 | 140 | 5 | 33 | insoluble |
| rPUR1 | Hexane | 60 | 1 | 60 | 5 | 33 | insoluble |
| rPUR1 | MDA | 170 | 1 | 170 | 5 | 33 | insoluble |

Notably, under these reaction conditions rPUR1 only dissolves in diethylenetriamine and diaminopentane, demonstrating the high reactivity of these amines. When aminohexane, dipropylamine, pentanediol or hexane are used, rPUR1 doesn't dissolve, either due to their lower reactivity or their limiting low boiling point. Furthermore, the aromatic amine (MDA) formed during the reaction was found to be ineffective at depolymerizing rPURl, even at 170°C.

**Purification of PMDA from aminolysis products of rPUR1.** For aminolysis reactions performed with DETA, PMDA was separated from the reaction product by precipitation. Purity of the separated PMDA was assessed using semi-quantitative LC-UV-HRMS. Further characterization was performed using GPC. The separation was proven to be unsuccessful for reactions with conversion lower than 95% (table 2; figure 3b&c). For reaction with conversions higher than 95%, PMDA was purified from the reaction product with a yield of 48-80% and a purity of 67-100%. The yield of PMDI is defined as the wt% of the original PMDI content of the foam that is recovered as PMDA.

**Table 2**

| Amine | Addition T (°C) | Addition Time (h) | Reaction T (°C) | Reaction Time (h) | Polymer Loading (%) | Conv. (%) | Purity (%) | Yield (%) |
|---|---|---|---|---|---|---|---|---|
| Diethylenctriamine (DETA) | 120 | 1 | 160 | 5 | 33 | 97 | 76 | 58.4 |
| Diethylenctriamine (DETA) | 100 | 2 | 100 | 4 | 33 | 44 | 0 | 0 |
| Diethylenctriamine (DETA) | 120 | 1 | 120 | 5 | 33 | 59 | 0 | 0 |
| Diethylenctriamine (DETA) | 120 | 1 | 140 | 5 | 33 | 84 | 0 | 0 |
| Diethylenetriamine (DETA) | 120 | 1 | 160 | 5 | 10 | 97 | 100 | 47.8 |
| Diethylenctriamine (DETA) | 120 | 2 | 160 | 4 | 50 | 96 | 67 | 50.2 |
| Diethylenctriamine (DETA) | 120 | 3 | 160 | 3 | 66 | 95 | 98 | 79.8 |

**Aminolysis of end-of-life PUR (rPUR2) and PIR (rPIR1) foams and subsequent purification of PMDA.** Depolymerization of rPUR2 and rPIRl was performed with diethylenetriamine (DETA) for 6 hours, 33% or 50% polymer loading, and a temperature of 160°C. Conversion of the depolymerization reaction is monitored by ¹H-NMR spectroscopy. PMDA is purified from the resulting aminolysis product by precipitation. The amount of PMDA recovered is defined as the wt% of PMDA purified from the reaction product compared to the total weight of the foam present in the reaction product (Table 3).

**Table 3**

| Foam | Amine | Addition T (°C) | Addition Time (h) | Reaction T (°C) | Reaction Time (h) | Polymer Loading (%) | Conv. (%) | Purity (%) | PMDA Recovery (%) |
|---|---|---|---|---|---|---|---|---|---|
| rPIR1 | DETA | 120 | 1 | 160 | 5 | 33 | 94 | 81 | 36 |
| rPUR2 | DETA | 120 | 1 | 160 | 5 | 33 | 96 | 69 | 22 |
| rPIR1 | DETA | 120 | 1 | 160 | 5 | 50 | 94 | 73 | 32 |
| rPUR2 | DETA | 120 | 1 | 160 | 5 | 50 | 95 | 78 | 26 |

The aminolysis reaction of end-of-life rPIRl and rPUR2 with diethylenetriamine reach full conversion after 6 hours at 160°C, for both 33% and 50% polymer loading. In the subsequent purification, a clear distinction between rPIRl and rPUR2 is visible. For rPIR1, 32-36% of the foam could be recovered as PMDA with a purity of 73-81%. For rPUR2, only 22-26% of the foam could be recovered as PMDA with a purity of 69-78%. The difference could be explained by the typical higher PMDI content present in PIR foams compared to PUR foams.

**Observations.** Previous publications by Xue et. Al. (Preparation of epoxy hardeners from waste rigid polyurethane foam and their application. Journal of applied polymer science 1995, 56 (2), 127-134) report depolymerization of rigid foams using DETA and TETA at 170-180°C for 1-2 hours at a polymer loading of 66%. However, compared to the present results they reported incomplete conversion. While the reaction temperature is high enough to reach full conversion, the shorter reaction time explains the incomplete conversion as 3 hours was needed to fully dissolve the foam at 160°C at 66% polymer loading, making it highly unlikely that 2 hours would be sufficient for full conversion at 170 or 180°C.

## Claims

1. A method for depolymerizing rigid polymeric polyurethane (PUR) or polyisocyanurate (PIR) foams, comprising:
refining said polymeric foams to form a refined product, in particular a powder;
adding the refined product to aliphatic amines to obtain a reaction mixture;
performing an aminolysis reaction on the reaction mixture under an inert atmosphere at elevated temperatures and extended incubation times to depolymerize the PUR or PIR foams; and recover polymeric methylene diphenyl diamine (PMDA) in high purity and high yields from the depolymerized PUR or PIR foams.

2. The method of claim 1, wherein PMDA is recovered from the depolymerized PUR or PIR foams by precipitation.

3. The method of claim 1, wherein the liquid aliphatic amines are selected from the group consisting of liquid aliphatic diamines and liquid aliphatic triamines.

4. The method of claim 1, wherein the reaction mixture comprises up to 70 %wt of the powder, in particular from about 10% wt to about 33% wt.

5. The method of claim 1, wherein the inert atmosphere is achieved by flushing the reaction mixture with nitrogen and placing the reaction mixture in a closed container.

6. The method of claim 1, wherein the elevated temperatures is at least 100°C; and preferably range from 100°C to 200°C, in particular between 120 and 160°C.

7. The method of claim 1, wherein the extended incubation times are up to 6 hours.

8. The method of claim 1, wherein the high purity of recovered PMDA is at least 45%.

9. The method of claim 1, wherein the high yields of recovered PMDA are at least 60%.

10. The method of claim 2, wherein the precipitation is performed using water or an alkaline aqueous solution.

11. The method of claim 1, wherein the recovered PMDA is used as a precursor to obtain polymeric methylene diisocyanate (PMDI) used in the synthesis of the PUR and PIR foams.

12. Use of the method of claim 1, for recycling rigid polymeric polyurethane (PUR) or polyisocyanurate (PIR) foams.
